# EUROPÄISCHE PATENTSCHRIFT

(11) **EP 1 848 904 B1**
(45) Veröffentlichungstag und Bekanntmachung des Hinweises auf die Patenterteilung: **14.01.2009**
(21) Anmeldenummer: 06707990.5
(22) Anmeldetag: 02.02.2006
(51) Int. Cl.: F16J 15/02, F16J 15/08, F01D 11/00

(54) **DICHTUNGSELEMENT ZUR VERWENDUNG IN EINER STRÖMUNGSMASCHINE**
SEALING ELEMENT FOR USE IN TURBOMACHINERY
ELEMENT D'ETANCHEITE S'UTILISANT DANS UNE TURBOMACHINE

(30) Priorität: 15.02.2005 CH 2582005
(43) Veröffentlichungstag der Anmeldung: 31.10.2007
(73) Patentinhaber: Alstom Technology Ltd, 5400 Baden (CH)
(72) Erfinder: CAMPINO JOHNSON, Nicolas, CH-5400 Baden (CH); HURTER, Jonas, CH-5400 Baden (CH); STEMANN, Markus, D-85354 Freising (DE); TRIFONOV, Sergey, Moskau, 109390 (RU); ZAGORSKIY, Alexander, CH-5408 Ennetbaden (CH)
(86) Internationale Anmeldenummer: PCT/EP2006/050629
(87) Internationale Veröffentlichungsnummer: WO 2006/087267

(56) Entgegenhaltungen:
- EP-A- 1 521 018
- DE-A1- 10 306 915
- GB-A- 2 303 888
- US-A- 5 240 263
- US-A- 5 975 844
- US-A1- 2004 208 748
- US-B1- 6 675 584

## Beschreibung

### Technisches Gebiet

Die Erfindung betrifft ein Dichtungselement zur Abdichtung eines Bauteilspalts gegenüber einer Strömung, insbesondere zur Verwendung in einer Strömungsmaschine, speziell in einer Turbomaschine. Ferner betrifft die Erfindung eine Strömungsmaschine, in der zur Abdichtung eines Bauteilspalts ein solches Dichtungselement angeordnet ist.

### Stand der Technik

In Strömungsmaschinen, wie beispielsweise in Gas- oder Dampfturbinen, kommt es aufgrund von Bauteilspalten zur Ausbildung von Bleed- bzw. Verlustströmungen. Hierbei dringt ein Teil des Arbeitsfluids der Hauptströmung, das entlang eines Strömungskanals durch die Strömungsmaschine strömt, in die an den Strömungskanal angrenzenden Bauteilspalte ein und entweicht über diese Bauteilspalte. Solche, in den Strömungskanal einmündende Bauteilspalte existieren beispielsweise zwischen plattformartig ausgebildeten Deckbandelementen der Beschaufelung, die aneinandergereiht eine innere oder äußere Begrenzungswand des Strömungskanals ausbilden.
Bleed- bzw. Verlustströmungen sind in aller Regel unerwünscht, da diese im Weiteren keinen Beitrag mehr zur Energieumsetzung liefern und somit als Verlust der Hauptströmung zu bilanzieren sind. Ferner ist das Arbeitsfluid insbesondere stromab einer Brennkammer sehr heiß. Bleed- bzw. Verlustströmungen, die aus dieser heißen Hauptströmung hervorgehen, sind demgemäss ebenso sehr heiß und können infolge von Wärmeübertragung Übertemperaturen der an die Bauteilspalte angrenzenden Bauteile verursachen.

Um Bleed- bzw. Verlustströmungen möglichst gering zu halten, wird üblicherweise konstruktiv versucht, die Bauteilspalte möglichst klein auszuführen. Jedoch sind insbesondere im Heißgasbereich oftmals Mindestspalte zwischen den Bauteilen erforderlich, um temperaturbedingte Dehnungen der Bauteile ausgleichen zu können.
Zur Minimierung der Bleed- bzw. Verlustströmungen ist es daher erforderlich, die zwecks Dehnungsausgleich teilweise notwendigen Bauteilspalte mit geeigneten Maßnahmen gegen ein unerwünschtes Eindringen von Arbeitsfluid abzudichten. Beispielsweise kann hierzu ein Kühl- bzw. Dichtfluid aus dem betreffenden Bauteilspalt ausgeblasen werden. Das ausgeblasene Kühl- bzw. Dichtfluid füllt den Bauteilspalt aus und verhindert hierdurch ein Eindringen von Arbeitsfluid in den Bauteilspalt. Um auch ein lokales Einströmen von Arbeitsfluid in den Bauteilspalt wirkungsvoll verhindern zu können, muss das Kühl- bzw. Dichtfluid jedoch sowohl in hinreichender Menge als auch mit einem genügenden Überdruck gegenüber dem Arbeitsfluid ausgeblasen werden. Insbesondere im Bereich des Turbineneintritts einer Strömungsmaschine ist die Forderung nach genügendem Überdruck des Kühl- bzw. Dichtfluids häufig nicht gegeben, da das Kühl- bzw. Dichtfluid zumeist aus dem Bereich des Verdichters der Strömungsmaschine abgezweigt wird und dementsprechend einen nur geringen Überdruck aufweist. Zur Unterstützung der Dichtwirkung und zur Minimierung der erforderlichen Menge an Kühl- bzw. Dichtfluid ist daher zusätzlich häufig eine Streifendichtung in den Bauteilspalt eingelegt. Die Streifendichtung ist hierzu so in dem Bauteilspalt angeordnet, dass sie den Bauteilspalt zumindest verengt oder weitgehend versperrt.

Derartige Streifendichtungen sind beispielsweise aus der EP 1 306 589, der DE 2 135 695 oder der US 5,975,844 bekannt*.*
In der EP 1 306 589 ist eine metallische, ein- oder mehrschichtige Dichtung beschrieben, die aus einem halboffenen, einfach oder mehrfach geschwungenen Profil besteht, welches in den abzudichtenden Spalt eingeklemmt wird. Die Dichtung erstreckt sich über die gesamte Länge des Bauteilspalts.
Aus der DE 2 135 695 ist ein Dichtring mit C-förmigem Querschnitt bekannt, bei der zum Spreizen des Dichtrings zwischen den Schenkeln eine Ringfeder angeordnet ist. Auch hier erstreckt sich die Dichtung über die gesamte Länge des Bauteilspalts.

US 5,975,844 offenbart, insbesondere in Figur 4, ein Dichtungselement nach dem Oberbegriff des Anspruchs 1.

Mittels derartiger Streifendichtungen wäre es zwar möglich, einen Bauteilspalt nahezu vollständig abzudichten. Insbesondere zur Kühlung der an den Bauteilspalt angrenzenden Bauteile oder des Dichtungselements selbst ist es aber oftmals erforderlich, einen gewissen Durchsatz an Kühlfluid durch den Bauteilspalt zuzulassen. In diesen Fällen können in den oben erwähnten Streifendichtungen Öffnungen vorgesehen werden, durch die Kühlfluid, das auf der der Arbeitsfluidströmung abgewandten Seite des Bauteilspalts dem Bauteilspalt zugeführt wird, in die Hauptströmung des Arbeitsfluids abgeführt wird. Hierzu ist ein Lieferdruck des Kühlfluids in dem Bauteilspalt so vorzusehen, dass radial über die Dichtung ein Druckgefälle in Richtung des Arbeitsfluids gewährleistet ist.
Kommt es im Betrieb jedoch zur Ausbildung eines lokal und zeitlich begrenzten Überdrucks des Arbeitsfluids, so besteht die Gefahr, dass sich das Druckgefälle auch umkehrt. Heißes Arbeitsfluid wird dann zumindest vorübergehend aus der Hauptströmung in den Bauteilspalt gedrückt und kann hier zu einer Materialüberhitzung der an den Bauteilspalt angrenzenden Bauteile oder auch der Dichtung selbst führen. Ein lokaler Überdruck kann beispielsweise durch das Vorbeilaufen einer Schaufelspitze an dem Bauteilspalt und die hierdurch verursachte Druckwelle hervorgerufen werden.

### Darstellung der Erfindung

Hier will die Erfindung Abhilfe schaffen. Der Erfindung liegt somit die Aufgabe zugrunde, ein Dichtungselement, eine Dichtungsanordnung sowie eine Strömungsmaschine der eingangs genannten Art anzugeben, mit denen die Nachteile des Standes der Technik vermindert oder vermieden werden. Insbesondere soll durch die Erfindung ein Dichtungselement zur Abdichtung von in Strömungsmaschinen existenten Bauteilspalten zur Verfügung gestellt werden, über die eine Kühlfluidströmung gezielt aus dem Bauteilspalt in die Hauptströmung einleitbar ist, wobei ein Eindringen von Fluid der Hauptströmung in den Bauteilspalt auch bei Auftreten einer lokalen Druckwelle innerhalb der Hauptströmung wirkungsvoll verhindert wird.

Weiterhin soll die Erfindung eine Strömungsmaschine zur Verfügung stellen, in der wenigstens ein in der Strömungsmaschine befindlicher Bauteilspalt wirkungsvoll mittels eines erfindungsgemäß ausgebildeten Dichtungselements abgedichtet ist.

Diese Aufgabe wird erfindungsgemäß durch das Dichtungselement gemäss Anspruch 1 sowie die Dichtungsanordnung und die Strömungsmaschine gemäss den nebengeordneten Vorrichtungsansprüchen gelöst. Weitere vorteilhafte Ausgestaltungen der Erfindung finden sich in den Unteransprüchen.

Das erfindungsgemäße Dichtungselement zur Abdichtung eines Bauteilspalts gegenüber einer Strömung, insbesondere zur Verwendung in einer Strömungsmaschine, speziell in einer Turbomaschine, umfasst ein Hohlprofil mit einer Länge und einer Breite sowie in Längsrichtung des Hohlprofils mit einem ersten Ende und einem zweiten Ende sowie ferner eine erste Seite und eine zweite Seite. Das Hohlprofil umschließt einen Hohlraum. Um das Dichtungselement mittels einer Kühlfluidströmung innenkühlen zu können, sind in dem Hohlprofil eine erste Öffnung und eine zweite Öffnung angeordnet. Die erste Öffnung ist auf der zweiten Seite des Hohlprofils angeordnet und als Einlassöffnung für das Kühlfluid in den Hohlraum des Hohlprofils ausgebildet. Die zweite Öffnung ist auf der ersten Seite des Hohlprofils angeordnet und als Auslassöffnung für das Kühlfluid aus dem Hohlraum des Hohlprofils ausgebildet. Ferner sind die erste Öffnung und die zweite Öffnung in Längsrichtung des Hohlprofils zueinander unter einem Abstand beabstandet angeordnet.
Ein über den Bauteilspalt zugeführtes Kühlfluid gelangt so über die erste Öffnung in den Hohlraum des Hohlprofils, strömt innerhalb des Hohlraums in Längsrichtung des Hohlprofils und entströmt letztlich über die zweite Öffnung dem Hohlraum. Durch die in dem Hohlraum erzeugte Innenströmung des Kühlfluids erfährt das Dichtungselement eine aktive Kühlung. Das Dichtungselement kann infolgedessen einer höheren Temperatur der angrenzenden Hauptströmung ausgesetzt werden, als dies ohne Kühlung der Fall wäre.
Durch die Beabstandung der ersten Öffnung zu der zweiten Öffnung wird einerseits festgelegt, welcher Abschnitt des Hohlprofils von dem Kühlfluid innendurchströmt wird. Andererseits ist durch die Beabstandung der ersten Öffnung zu der zweiten Öffnung zuverlässig gewährleistet, dass Fluid der Hauptströmung auch im Falle einer temporären, lokalen Druckwelle der Hauptströmung nicht in den Bauteilspalt einströmt. Dies ist darin begründet, dass die Kühlfluidströmung in dem Hohlraum des Hohlprofils zwischen der ersten Öffnung und der zweiten Öffnung einen Druckgradienten ausbildet. Der Druckgradient entspricht hierbei in etwa der Summe aus Druckverlust, den die Kühlfluidströmung beim Durchströmen des Hohlraums erleidet, und dem kinetischen Druck der Kühlfluidströmung beim Austritt aus der zweiten Öffnung. Damit Arbeitsfluid aus der Hauptströmung in den abgedichteten Teil des Bauteilspalts gelangen kann, müsste der in dem Hohlraum vorliegende Druckgradient zunächst von dem Arbeitsfluid in umgekehrter Richtung überwunden werden und es müsste zu einer Umkehrung der Strömungsrichtung in dem Hohlprofil kommen. Da Druckwellen der Hauptströmung, wie sie in Strömungsmaschinen typischerweise auftreten können, aber nur über einen kurzen Zeitraum einwirken, werden diese Druckwellen in dem Hohlraum des Hohlprofils vollständig oder nahezu vollständig dissipiert und ausgedämpft. Eine in Strömungsmaschinen typischerweise auftretende Druckwelle kann sich somit höchstens bis in den Hohlraum des Hohlprofils fortpflanzen. Insbesondere ist hierdurch sichergestellt, dass kein Fluid der Hauptströmung in den abgedichteten Bereich des Bauteilspalts gelangt.

Des Weiteren kann durch die Beabstandung der ersten Öffnung zu der zweiten Öffnung die Anordnung der zweiten Öffnung, d.h. der Auslassöffnung aus dem Hohlraum des Hohlprofils, vorteilhaft so gewählt werden, dass im Bereich der Auslassöffnung möglichst keine oder nur abgeschwächte Druckwellen der Hauptströmung auftreten und/oder dass das Druckniveau der Hauptströmung im Bereich der Auslassöffnung im Mittel niedriger ist als im Bereich der Eintrittsöffnung. Ersteres lässt sich beispielsweise dadurch erzielen, dass die zweite Öffnung in einem beschaufelungsfreien Zwischenraum des Strömungskanals, beispielsweise in dem Zwischenraum zwischen einem Rotor und einem stromab des Rotors angeordneten Stator der Strömungsmaschine oder stromab des Stators, angeordnet ist. Die durch das Vorbeilaufen der Schaufelspitzen des Rotors verursachten Druckwellen im Gehäusebereich treten in dem Zwischenraum zwischen Rotor und Stator bereits deutlich abgeschwächt auf. Stromab des Stators sind diese Druckwellen nochmals schwächer ausgeprägt.

Ein im Mittel niedrigeres Druckniveau der Hauptströmung ist in einer Turbine üblicherweise bei Anordnung der zweiten Öffnung stromab der ersten Öffnung gegeben. In einem Verdichter ist ein im Mittel niedrigeres Druckniveau der Hauptströmung üblicherweise bei Anordnung der zweiten Öffnung stromauf der ersten Öffnung gegeben.

Zweckmäßig ist der Abstand zwischen der ersten Öffnung und der zweiten Öffnung so gewählt, dass bei Anordnung des Dichtungselements in einer Strömungsmaschine ein im Betrieb der Strömungsmaschine auftretender gemittelter statischer Druck der Hauptströmung im Bereich der zweiten Öffnung geringer ist als ein gemittelter Gesamtdruck des Kühlfluids am Eintritt in die erste Öffnung.
Das Druckgefälle der Kühlfluidströmung zwischen Eintrittsöffnung und Auslassöffnung stellt für das Fluid der Hauptströmung somit gleichsam einen strömungsmechanischen Widerstand dar, durch den ein Eindringen von Fluid der Hauptströmung in den Hohlraum des Hohlprofils des Dichtungselements und weiter in den Bauteilspalt wirkungsvoll verhindert wird.

Das Hohlprofil des erfindungsgemäßen Dichtungselements umfasst eine erste Seite, die bei Anordnung des Dichtungselements in einer Strömungsmaschine der Hauptströmung zugewandt ist, und eine zweite Seite, die bei Anordnung des Dichtungselements in der Strömungsmaschine der Hauptströmung abgewandt ist. Die Einlassöffnung ist dann auf der zweiten Seite des Hohlprofils, die Auslassöffnung auf der ersten Seite des Hohlprofils angeordnet. Somit mündet die Einlassöffnung bei Anordnung des Dichtungselements in einem Bauteilspalt oder angrenzend an den Bauteilspalt in den abgedichteten Bereich des Bauteilspalts, die Auslassöffnung hingegen mittelbar oder unmittelbar in die Hauptströmung. Mittelbar bedeutet hierbei, dass die Auslassöffnung auch zunächst in einen Endabschnitt des Bauteilspalts einmünden kann, der dann in die Hauptströmung einmündet.

Zumeist wird es zweckmäßig sein, das Hohlprofil mit einem rechteckförmigen Querschnitt oder einem näherungsweise rechteckförmigen Querschnitt mit einer ersten Seite und einer zweiten Seite sowie mit zwei einander gegenüberliegenden Seitenflächen auszuführen. Auch der Hohlraum des Hohlprofils ist dann zweckmäßig rechteckförmig auszuführen, wodurch weitgehend konstante Wandstärken des Hohlprofils realisiert werden können.

Um sicherzustellen, dass das Kühlfluid die gesamte Länge des Hohlraum durchströmt, ist die Einlassöffnung zweckmäßig angrenzend an das erste Ende des Hohlprofils und die Auslassöffnung angrenzend an das zweite Ende des Hohlprofils angeordnet.

Zweckmäßig ist das Dichtungselement als Hochtemperaturdichtung weitergebildet. Beispielsweise ist hierfür die der Strömung zugewandte erste Seite des Hohlprofils zweckmäßig aus einem hochtemperaturfesten Material hergestellt oder mit einem hochtemperaturfesten Material beschichtet. Die erste Seite des Dichtungselements kann so einer höheren Temperatur ausgesetzt werden.

Des Weiteren ist vorzugsweise wenigstens eine Seitenfläche des Hohlprofils aus einem federnden Material hergestellt. Die Seitenfläche kann so unter Vorspannung gehaltert werden, beispielsweise durch das Einklemmen der Seitenfläche zwischen zwei Vorsprüngen.
Alternativ oder ergänzend ist die wenigstens eine Seitenfläche des Hohlprofils zweckmäßig mit einer federaktiven Kontur ausgeführt. Auch die federaktive Kontur ermöglicht, dass die Seitenfläche unter Vorspannung gehaltert werden kann.
Die federaktive Kontur der wenigstens einen Seitenfläche kann beispielsweise ziehharmonikaförmig oder halbrund oder halboval oder näherungsweise halbrund oder näherungsweise halboval ausgebildet sein.

Weiterhin stellt die Erfindung eine Dichtungsanordnung zur Verwendung in einem Strömungskanal, der von einem Arbeitsfluid durchströmt wird und der wenigstens eine Begrenzungswand umfasst, zur Verfügung. Die Strömung des Arbeitsfluids weist hierbei in Strömungsrichtung einen Druckgradienten auf. Ferner umfasst die Begrenzungswand einen Bauteilspalt mit wenigstens zwei Spaltseitenflächen.

Zur Abdichtung des Bauteilspalts gegenüber dem Arbeitsfluid ist in dem Bauteilspalt oder im Bereich des Bauteilspalts ein wie oben beschriebenes, erfindungsgemäß ausgebildetes Dichtungselement angeordnet.

In einem weiteren Aspekt stellt die Erfindung eine Strömungsmaschine, insbesondere eine Turbomaschine, mit einem Strömungskanal, der wenigstens eine Begrenzungswand umfasst und der im Betrieb der Strömungsmaschine von einem Arbeitsfluid durchströmt wird, wobei die Begrenzungswand einen Bauteilspalt umfasst mit wenigstens zwei Spaltseitenflächen, und wobei zur Abdichtung des Bauteilspalts gegenüber dem Arbeitsfluid in dem Bauteilspalt ein Dichtungselement gemäß obiger Beschreibung angeordnet ist, zur Verfügung.
Besonders wirkungsvoll ist die Anordnung des Dichtungselements bei einem Bauteilspalt, der sich in Strömungsrichtung des Arbeitsfluids oder im Wesentlichen in Strömungsrichtung des Arbeitsfluids erstreckt. Die Erfindung kann aber auch bei solchen Bauteilspalten zum Tragen kommen, die sich hiervon abweichend in Bezug auf die Strömungsrichtung des Arbeitsfluids erstrecken.
Als typische Bauteilspalte, die mittels der Erfindung sehr wirkungsvoll abgedichtet werden können, seien hier die zwischen zwei strömungskanalbegrenzenden Plattformen, beispielsweise zwischen zwei Schaufeldeckbandelementen, verlaufenden Bauteilspalte genannt.

Es wird hier davon ausgegangen, dass die Strömung des Arbeitsfluids im Betrieb der Strömungsmaschine über die Länge des abzudichtenden Bauteilspalts oder über wenigstens einen Teil der Länge des abzudichtenden Bauteilspalts einen Druckgradienten ausbildet mit einem Bereich höheren Drucks und einem Bereich niedrigeren Drucks der Strömung. Die Einlassöffnung ist dann zweckmäßig auf Höhe des höheren Drucks und die Auslassöffnung auf Höhe des niedrigeren Drucks angeordnet.
Verläuft der Bauteilspalt in Richtung der Strömung und wird der Strömung keine technische Arbeit oder ein anderweitiger Impulseintrag zugeführt, so ist ein solcher Druckgradient aufgrund der in einer Strömung auftretenden Druckverluste in Strömungsrichtung gegeben. Die Einlassöffnung ist dann zweckmäßig in Strömungsrichtung betrachtet stromauf der Auslassöffnung angeordnet.

Gemäß einer zweckmäßigen Anwendung der Erfindung ist der Bauteilspalt in einer Turbine der Strömungsmaschine angeordnet. Ferner erstreckt sich der Bauteilspalt in Strömungsrichtung des Arbeitsfluids oder im Wesentlichen in Strömungsrichtung des Arbeitsfluids. Erfindungsgemäß ist die Auslassöffnung dann in Strömungsrichtung des Arbeitsfluids stromab der Einlassöffnung angeordnet und nutzt so das in der Turbine existente Druckgefälle zur Stabilisierung der Kühlfluidströmung innerhalb des Hohlprofils. Ein Eindringen von Heißgas der Turbinenströmung in den durch das Dichtungselement abgedichteten Bereich des Bauteilspalts wird hierdurch wirkungsvoll verhindert. So bewirken in der Turbinenströmung auftretende Druckwellen, wie diese beispielsweise durch die Schaufelspitzen der Beschaufelung eines Turbinenrotors verursacht werden, allenfalls, dass heißes Fluid der Turbinenströmung in den Bereich der Einlassöffnung gelangt. Es zeigte sich hierbei, dass die Zeitdauer derartiger, in Strömungsmaschinen üblicherweise auftretender Druckwellen aber selbst bei großen Amplituden der Druckwellen nicht ausreicht, um die Kühlfluidströmung in dem Hohlprofil des Dichtungselements umzukehren, wodurch heißes Fluid der Turbinenströmung in den durch das Dichtungselement abgedichteten Bereich des Bauteilspalts gelangen würde.

Bevorzugt mündet die zweite Öffnung in einen schaufelfreien Zwischenraum des Strömungskanals. Druckwellen, die durch Schaufelspitzen verursacht werden, treten in den schaufelfreien Zwischenräumen bereits deutlich gedämpft auf. Derartige schaufelfreie Zwischenräume existieren beispielsweise zwischen einem Rotor und einem nachfolgend angeordneten Stator oder am Austritt aus einem Stator vor dem Eintritt in einen weiteren Rotor.
Insbesondere dann, wenn das Kühlfluid am Austritt aus dem Hohlprofil für Kühlungszwecke noch nicht verbraucht ist, kann es aber auch vorteilhaft sein, die zweite Öffnung des Hohlprofils in einen weiteren Kühlkanal einmünden zu lassen.

Gemäß einer bevorzugten Ausführung der Erfindung sind die erste Öffnung und die zweite Öffnung um wenigstens etwa die Breite einer Schaufel zueinander beabstandet. Mit Breite einer Schaufel ist die in Strömungsrichtung betrachtete Ausdehnung der Schaufel bezeichnet. Insbesondere in den Fällen, in denen es aufgrund der durch die Schaufeln an der Schaufelvorderkante verursachten Staupunktströmungen zu dem Aufbau einer Druckwelle und hierdurch zu einem Einströmen von heißem Fluid in einen angrenzenden Bauteilspalt kam, genügt es oftmals, die Einlassöffnung im Bereich der Schaufelvorderkante und die Auslassöffnung unmittelbar stromab der Schaufel anzuordnen.
Um ein höheres Druckgefälle der Strömung nutzen zu können, wird es aber in vielen Anwendungsfällen zweckmäßig sein, die erste Öffnung und die zweite Öffnung um etwa eine Breite einer Stufe der Strömungsmaschine zueinander zu beabstanden. Mit Breite einer Stufe ist die in Strömungsrichtung betrachtete Ausdehnung der Stufe bezeichnet. Mit dem dem Fachmann geläufigen Begriff einer Stufe einer Strömungsmaschine ist hier lediglich die paarige Anordnung eines Rotors und eines Stators bezeichnet. Ferner ist mit Breite die in Durchströmrichtung betrachtete Abmessung der Stufe bezeichnet. Einerseits ist bei Anordnung der ersten Öffnung und der zweiten Öffnung in einem Abstand von etwa einer Breite einer Stufe zueinander gewährleistet, dass das Druckgefälle der Hauptströmung hinreicht, um eine stabile Kühlfluidströmung innerhalb des Hohlprofils auszubilden. Dies gilt auch für solche Fälle, in denen das Kühlfluid beim Eintritt in das Hohlprofil nur einen gleich hohen oder einen nur geringfügig höheren Druck aufweist wie die Hauptströmung auf Höhe der Eintrittsöffnung. Andererseits stellt sich hierbei auch kein zu großes Druckgefälle ein, wodurch der Massendurchsatz an Kühlfluid und somit an Kühlfluidbedarf erhöht würde.

Ferner mündet in den durch das Dichtungselement abgedichteten Bereich des Bauteilspalts zweckmäßig eine Kühlfluidzuführung ein. Das Kühlfluid wird im Betrieb der Strömungsmaschine über die Kühlfluidzuführung dem abgedichteten Bereich des Bauteilspalts zugeführt und gelangt von hier über die Einlassöffnung in das Hohlprofil der Dichtung.

Gemäß einer weiteren zweckmäßigen Ausgestaltung der Erfindung ist zur Fixierung des Dichtungselements in dem Bauteilspalt ist in einer Spaltseitenfläche eine Nut angeordnet, in die das Hohlprofil längsseitig eingreift.
Hierzu ist das Hohlprofil des Dichtungselements vorzugsweise längs der einen Seitenfläche des Hohlprofils in der Nut geklemmt und wird hierüber in dem Bauteilspalt fixiert.
Vorzugsweise ist zur Fixierung des Dichtungselements in dem Bauteilspalt in jeder der beiden Spaltseitenflächen jeweils eine Nut ausgebildet, wobei die Nuten sich so einander gegenüberliegen, dass das Hohlprofil mit je einer Längsseite in je eine Nut eingreifen kann.

### Kurze Beschreibung der Zeichnungen

Die Erfindung wird nachfolgend anhand von in den Figuren illustrierten Ausführungsbeispielen näher erläutert. Es zeigen:
- Figur 1: eine Gasturbine in schematisierter Darstellung;
- Figur 2: eine Draufsicht auf eine Statorschaufel mit am Schaufelfuß angeordnetem Deckbandelement;
- Figur 3: einen Schnitt durch eine Turbinenstufe mit erfindungsgemäß angeordneter Dichtung;
- Figur 4: die Dichtungsanordnung aus Figur 3 in einer Frontansicht;
- Figur 5: ein erfindungsgemäß ausgeführtes Dichtungselement in perspektivischer Ansicht.

In den Figuren sind nur die für das Verständnis der Erfindung wesentlichen Elemente und Bauteile dargestellt.
Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

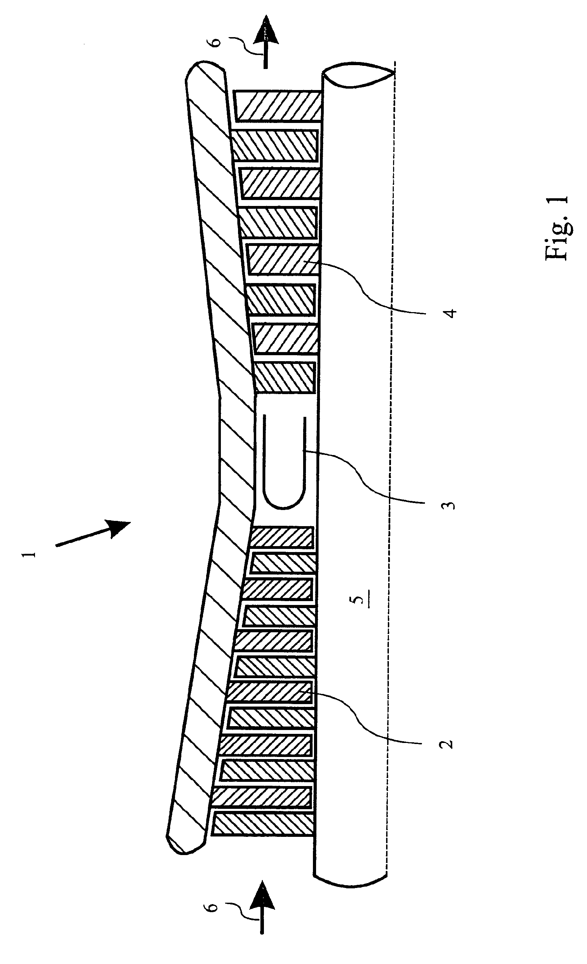

In Figur 1 ist in schematisierter Darstellung eine aus dem Stand der Technik bekannte Gasturbine 1 dargestellt. Derartige Gasturbinen werden beispielsweise in Kraftwerksanlagen zur Stromerzeugung eingesetzt und stellen ein typisches Anwendungsgebiet der Erfindung dar. Das erfindungsgemäß ausgebildete Dichtungselement kann aber auch in anderweitig eingesetzten Strömungsmaschinen, wie beispielsweise in Strömungsmaschinen, die in Prozessanlagen oder zur Antriebserzeugung eingesetzt werden, zur Anwendung kommen.
Die Gasturbine 1 umfasst als wesentliche, in Figur 1 dargestellte Komponenten einen Verdichter 2, eine Brennkammer 3 sowie eine Turbine 4. Der Verdichter 2 und die Turbine 4 sind über eine Welle 5 drehfest miteinander verbunden. Weiterhin bilden der Verdichter 2, die Brennkammer 3 und die Turbine 4 einen Strömungspfad, der in Figur 1 durch den Strömungspfeil 6 angedeutet ist. Im Betrieb der Gasturbine 1 strömt ein Arbeitsfluid, zumeist Luft, entlang des Strömungspfads durch die Gasturbine 1. In Figur 1 nicht dargestellt ist ein mit der Welle der Gasturbine antriebsverbundener Generator, der zur Stromerzeugung von der Gasturbine angetrieben wird. Aufbau, Funktionsweise sowie technische Weiterbildungen derartiger, wie in Figur 1 dargestellter Gasturbinen sind dem Fachmann aus dem Stand der Technik hinlänglich bekannt, weswegen an dieser Stelle auf eine vertiefende Erläuterung verzichtet wird.

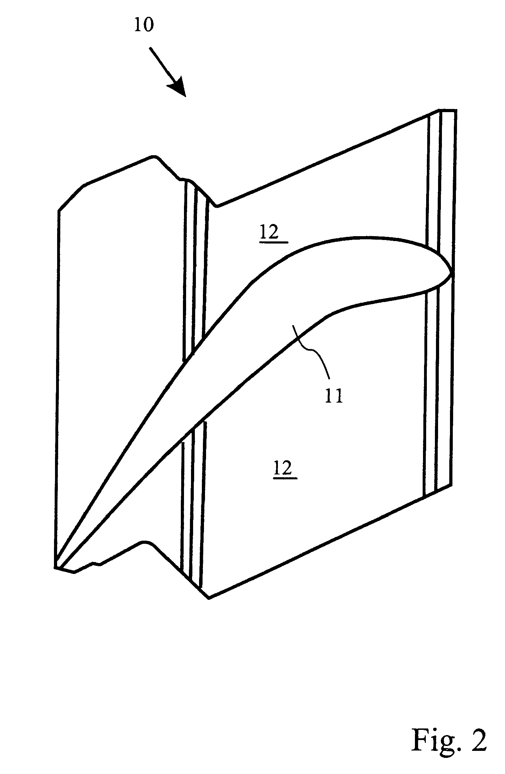

Die Schaufeln von Verdichtern und Turbinen derartiger Gasturbinen sind oftmals mit plattformartig ausgebildeten Deckbandelementen, die an den Schaufelfüßen und/oder an den Schaufelköpfen der Schaufeln angeordnet sind, ausgestattet. Figur 2 zeigt beispielhaft eine Draufsicht auf eine Statorschaufel 10 mit einem Schaufelblatt 11 und einem am Schaufelfuß angeordneten Deckbandelement 12. Werden derartige, mit einem oder zwei Deckbandelementen ausgebildete Schaufeln am Umfang eines Verdichters bzw. einer Turbine aneinandergereiht, so grenzen die Deckbandelemente benachbart angeordneter Schaufeln aneinander. Insgesamt kommt es so durch die am Umfang des Verdichters bzw. der Turbine aneinandergereihten Deckbandelemente zur Ausbildung eines Innenrings und/oder eines Außenrings. Der in dieser Weise ausgebildete Innenring bzw. Außenring dient als Begrenzung des Strömungskanals, durch den im Betrieb der Strömungsmaschine das Arbeitsfluid strömt. Diese Strömung des Arbeitsfluids wird auch als Hauptströmung der Strömungsmaschine bezeichnet.
Zwischen den am Umfang der Strömungsmaschine aneinandergereihten Deckbandelementen verbleibt jedoch jeweils ein, wenngleich auch kleiner, in Strömungsrichtung des Arbeitsfluids verlaufender Spalt. Die Spalte können dabei teilweise auch erwünscht sein, um beispielsweise wärmebedingte Dehnungen der Bauteile ausgleichen zu können. Jedoch dringt im Betrieb der Strömungsmaschine Arbeitsfluid aus dem Strömungskanal in diese Spalte ein und gelangt von hier in die rückwärtige, innere Bauteilstruktur der Strömungsmaschine. Nachteilig hieran ist einerseits, dass das in dieser Weise als Bleedluft entweichende Arbeitsfluid keinen weiteren Beitrag zur Energieumsetzung und damit eine Verlustströmung der Strömungsmaschine darstellt. Andererseits weist das Arbeitsfluid vor allem im Turbinenbereich oftmals eine sehr hohe Temperatur auf, die über der maximal zulässigen Bauteiltemperatur der rückwärtigen Bauteile der Strömungsmaschine liegt. Infolgedessen kann es zu einer Überhitzung und hierdurch zu einer Bauteilzerstörung der betroffenen Bauteile kommen.
Diese Aussagen treffen natürlich auch auf andere, in den Strömungskanal einmündende Bauteilspalte zu.
Zur Abdichtung derartiger Bauteilspalte ist aus dem Stand der Technik bekannt, den Bauteilspalt mit einer den Bauteilspalt weitgehend abdichtenden Dichtung auszustatten. Um thermisch hoch belastete Dichtungen darüber hinaus kühlen zu können, ist auch bekannt, dem Bauteilspalt zusätzlich Kühlluft zuzuführen, die dann an der Dichtung vorbei oder durch definierte Durchtrittsöffnungen in der Dichtung in die Hauptströmung eingeblasen wird. Der Druck der Kühlluft wird dabei im Regelfall so ausgelegt, dass radial über die Dichtung ein Druckgefälle in Richtung der heißen Hauptströmung vorliegt. Durch die Entstehung eines temporären, lokal begrenzten Überdrucks der Hauptströmung, der beispielsweise durch eine Druckwelle an der Schaufelspitze einer an dem Bauteilspalt vorbeibewegten Schaufel verursacht sein kann, kann es jedoch zu einer Umkehrung des Druckgefälles kommen, wodurch heißes Arbeitsfluid in den Dichtspalt gedrückt wird. Dies kann dann zur Folge haben, dass die Dichtung sowie auch an den Bauteilspalt angrenzende Bauteile nicht mehr hinreichend gekühlt werden und infolge Überhitzung Schaden nehmen.

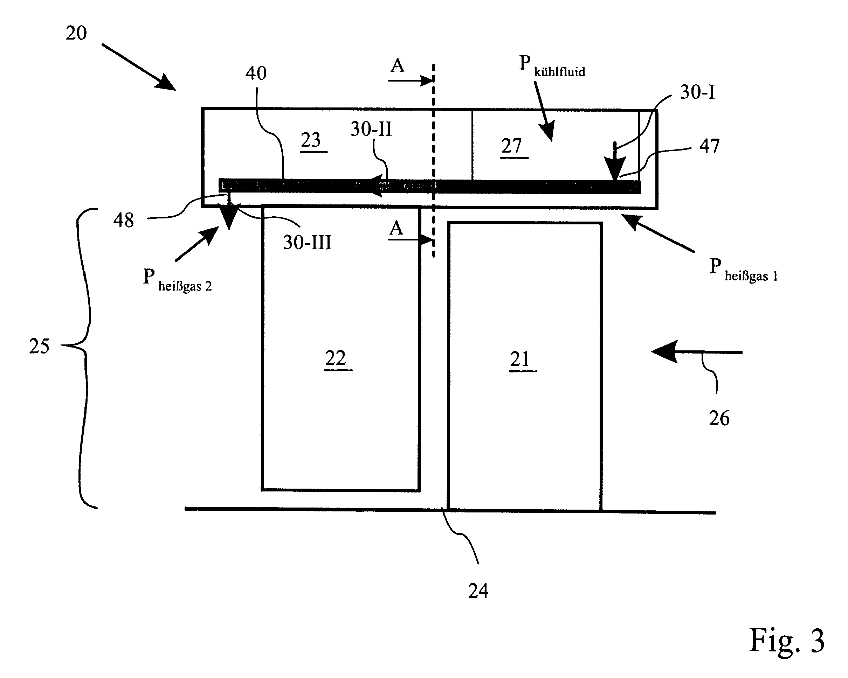

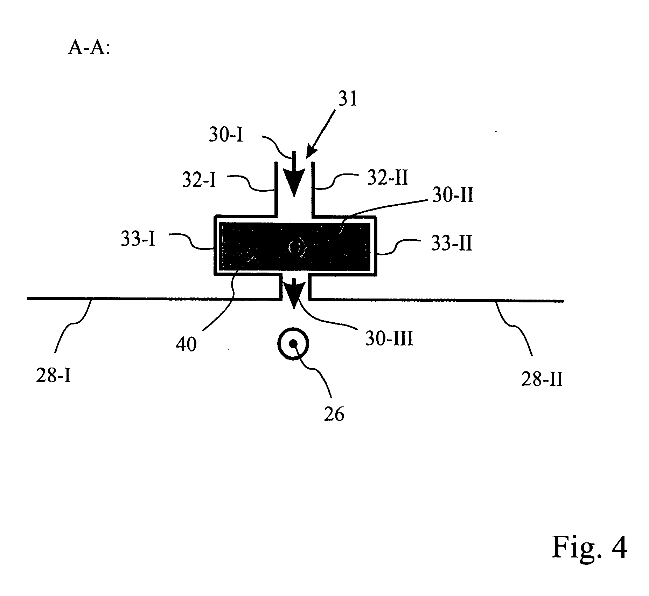

Hier setzt die Erfindung an. Figur 3 zeigt einen Schnitt durch eine Turbinenstufe 20, die einen Bauteilspalt 31 (in Figur 4 dargestellt) aufweist. In dem Bauteilspalt 31 ist ein erfindungsgemäß ausgebildetes Dichtungselement 40 angeordnet. Figur 4 zeigt einen Schnitt durch den Bauteilspalt 31 der Turbinenstufe 20 längs der in Figur 3 angegebenen Schnittführung A-A.

Die in den Figur 3 schematisiert dargestellte Turbinenstufe 20 umfasst einen Rotor sowie einen stromab des Rotors angeordneten Stator, wobei der Rotor in Figur 3 nur durch eine Rotorschaufel 21 und der Stator nur durch eine Statorschaufel 22 wiedergegeben sind. Ferner ist mit dem Begriff einer 'Turbinenstufe' hier lediglich die paarige Anordnung eines Rotors und eines Stators bezeichnet und nicht, wie sonst zumeist üblich, die festgelegte Reihenfolge der Anordnung dergestalt, dass in einer Turbine zuerst ein Stator und stromab des Stators ein Rotor folgt.
Der Strömungskanal 25 der Turbinenstufe 20, der im Betrieb der Strömungsmaschine von dem Arbeitsfluid gemäß dem Strömungspfeil 26 durchströmt wird, wird rotorseitig von der Rotorwelle 24 und gehäuseseitig (in Figur 3 mit Bezugszeichen 23 gekennzeichnet) von am Umfang des Strömungskanals aneinandergereihten, plattformartig ausgebildeten Deckbandelementen begrenzt. Figur 4 zeigt die aneinandergereihte Anordnung zweier gehäuseseitiger Deckbandelemente 28-I und 28-II. Wie Figur 4 zu entnehmen ist, verbleibt zwischen den zwei am Umfang aneinandergereihten Deckbandelementen 28-I und 28-II ein Bauteilspalt 31, der sich in dem hier dargestellten Ausführungsbeispiel in axialer Richtung der Strömungsmaschine über die gesamte Turbinenstufe 20 erstreckt. In axialen Strömungsmaschinen entspricht die axiale Richtung der Strömungsmaschine der Längsrichtung 26 der Strömung des Arbeitsfluids. Der Bauteilspalt 31 wird wiederum von zwei Spaltseitenflächen 32-I und 32-II begrenzt. Darüber hinaus kann der Bauteilspalt 31 auch am stromaufwärtigen Ende und/oder am stromabwärtigen Ende durch weitere, hier nicht dargestellte Spaltseitenflächen begrenzt sein.

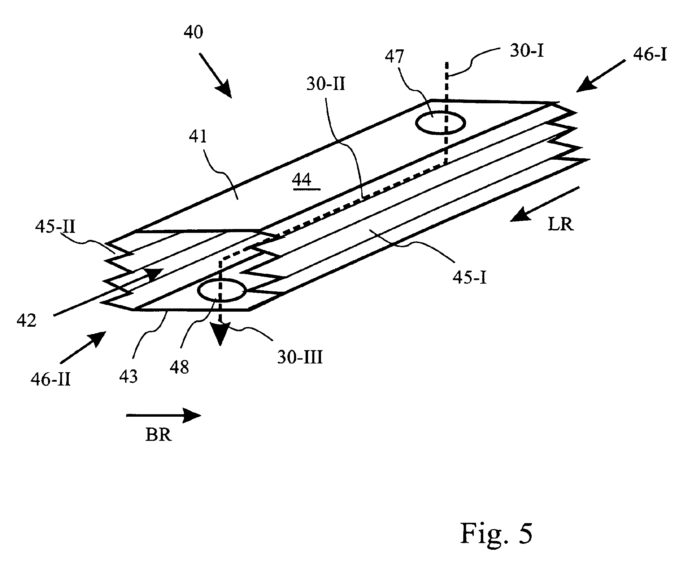

Um den Bauteilspalt 31 gegenüber dem im Betrieb der Strömungsmaschine in dem Strömungskanal 25 strömenden, heißen Arbeitsfluid abzudichten, ist in dem Bauteilspalt 31 ein Dichtungselement 40 gemäß der Erfindung angeordnet.
Ein zur Anordnung in dem Bauteilspalt geeignetes Dichtungselement 40 ist beispielhaft in Figur 5 perspektivisch dargestellt.
Das Dichtungselement 40 umfasst ein Hohlprofil 41, das einen Hohlraum 42 umschließt. Das Hohlprofil 41 weist eine Längsrichtung L sowie eine Breitenrichtung B auf mit einem in Längsrichtung L betrachteten ersten Ende 46-I und einem in Längsrichtung L betrachteten zweiten Ende 46-II. Das Dichtungselement 40 kann aber in Längsrichtung L auch mit einer wesentlich größeren als der dargestellten Länge ausgeführt sein.
Weiterhin weist das in Figur 5 dargestellte Hohlprofil 41 einen näherungsweise rechteckförmigen Querschnitt auf mit einer ersten Seite 43, einer zweiten Seite 44 sowie mit zwei einander gegenüberliegenden Seitenflächen 45-I und 45-II.
Die erste Seite 43 ist bei Anordnung des Dichtungselements 40 in der Strömungsmaschine gemäß Figur 3 der Hauptströmung der Strömungsmaschine zugewandt, die zweite Seite 44 der Hauptströmung abgewandt.
Um die Temperaturbeständigkeit zu erhöhen, ist die erste Seite 43 des Hohlprofils 41 hier aus einem hochtemperaturfesten Werkstoff hergestellt.
Die ziehharmonikaförmig und somit mit einer federaktiven Kontur ausgebildeten Seitenflächen 45-I und 45-II des Hohlprofils 41 sind aus einem Federwerkstoff hergestellt.
Weiterhin ist auf der zweiten Seite 44 des Hohlprofils 41 eine erste Öffnung 47 und auf der ersten Seite 43 des Hohlprofils 41 eine zweite Öffnung 48 angeordnet. Die erste Öffnung 47 ist nahe dem ersten Ende 46-I des Hohlprofils 41 angeordnet und als Einlassöffnung für Kühlfluid in den Hohlraum 42 des Hohlprofils 41 ausgebildet. Die zweite Öffnung 48 ist nahe dem zweiten Ende 46-II des Hohlprofils 41 angeordnet und als Auslassöffnung für Kühlfluid aus dem Hohlraum 42 des Hohlprofils 41 ausgebildet.
Die erste Öffnung 47 und die zweite Öffnung 48 sind somit, wie in Figur 5 dargestellt, in Längsrichtung L des Hohlprofils 41 unter einem Abstand A zueinander beabstandet angeordnet. Im Gegensatz hierzu wären bei einer Durchgangsöffnung die beiden Öffnungen auf einer Verbindungslinie zueinander, d.h. fluchtend zueinander, angeordnet.
Wie Figur 3 zu entnehmen ist, sind die erste Öffnung 47 und die zweite Öffnung 48 hier um etwas mehr als die Breite der in Figur 3 dargestellten Turbinenstufe 20 zueinander beabstandet.
Durch die zueinander beabstandete Anordnung der ersten Öffnung 47 zu der zweiten Öffnung ist das durch die erste, als Einlassöffnung ausgebildete Öffnung 47 in den Hohlraum 42 des Hohlprofils 41 einströmende Kühlfluid dazu gezwungen, in dem Hohlraum 42 zunächst in Längsrichtung L des Hohlprofils 41 zu strömen, bevor es über die zweite, als Auslassöffnung ausgebildete Öffnung 48 wieder aus dem Hohlraum 42 des Hohlprofils 41 austreten kann. Hierdurch wird das Hohlprofil 41 des Dichtungselements 40 innengekühlt.
Weiterhin ist der Abstand zwischen der ersten Öffnung 47 und der zweiten Öffnung 48 zweckmäßig so zu wählen, dass bei Anordnung des Dichtungselements 40 in der Strömungsmaschine ein im Betrieb der Strömungsmaschine auftretender statischer Druck der Hauptströmung im Bereich der zweiten Öffnung 48 im Mittel niedriger ist als ein Gesamtdruck des Kühlfluids beim Eintritt in die erste Öffnung 47. In der in Figur 3 dargestellten Anordnung des Dichtungselements 40 in der Turbinenstufe 20 ist diese Bedingung in einfacher Weise dadurch realisiert, dass die zweite Öffnung 48 in Strömungsrichtung 26 des Arbeitsfluids stromab der ersten Öffnung 47 angeordnet ist. Der Gesamtdruck des Kühlfluids am Eintritt in die erste Öffnung 47 liegt hierbei lediglich geringfügig über dem statischen Druck der Hauptströmung auf Höhe der ersten Öffnung. Da eine Strömung in einer Turbine grundsätzlich verlustbehaftet ist, tritt in der Hauptströmung der Turbinenstufe 20 in Strömungsrichtung des Arbeitsfluids ein Druckabfall auf. Die zweite Öffnung 48 ist somit automatisch auf Höhe eines niedrigeren Druckniveaus der Strömung angeordnet als die erste Öffnung 47.
Das in dieser Weise erfindungsgemäß ausgeführte Dichtungselement 40 nutzt somit das Druckgefälle der Hauptströmung in axialer Richtung und nicht wie herkömmliche Dichtungen das radiale Druckgefälle.
Neben dem Effekt der Innenkühlung des Hohlprofils 41 ist durch die voneinander beabstandete Anordnung der Einlassöffnung 47 zur Auslassöffnung 48 auch gewährleistet, dass selbst im Falle einer in der Hauptströmung auftretenden Druckwelle kein Arbeitsfluid in den abgedichteten Bereich des Bauteilspalts 31 gelangt. In dem in Figur 3 dargestellten Ausführungsbeispiel mündet die Auslassöffnung hierzu in einen schaufelfreien Zwischenraum des Strömungskanals stromab des Stators. In schaufelfreien Zwischenräumen kommt es zu einem sehr raschen Abbau von Druckwellen, die beispielsweise durch die Schaufelspitzen vorangehender Schaufeln verursacht wurden. Andererseits kommt es selbst im Falle einer kurzzeitig auftretenden, hohen Druckwellen der heißen Hauptströmung aufgrund des Dämpfungseffekts der in dem Hohlprofil 41 geführten Kühlfluidströmung zu keiner Strömungsumkehrung innerhalb des Hohlprofils 41. Somit läßt sich mit Hilfe des erfindungsgemäß ausgebildeten Dichtungselements wirkungsvoll verhindern, dass heißes Fluid der Hauptströmung in den Bauteilspalt 31 gelangt. Allenfalls könnte es bei Druckwellen mit sehr hohen Amplituden oder langer Einwirkdauer zu einem geringfügigen Einströmen von Arbeitsfluid in die Auslassöffnung 48 des Hohlprofils 41 kommen. Aufgrund der jedoch auch im Maximalfall nur sehr geringen Menge an einströmendem Fluid der Hauptströmung käme es auch in diesem Fall nicht zu einer thermischen Überbeanspruchung des Dichtungselements 40.

Wie in Figur 4 in Prinzipdarstellung wiedergegeben ist, ist zur Fixierung des Dichtungselements 40 in beiden Spaltseitenflächen 32-I und 32-II jeweils eine Nut 33-I sowie 33-II angeordnet. Die Nuten 33-I sowie 33-II befinden sich auf gleicher Höhe zueinander. Das Dichtungselement 40 wird durch jeweils längsseitigen Eingriff des Hohlprofils 41 in die Nuten 33-I sowie 33-II in dem Bauteilspalt 31 fixiert, d.h. jeweils eine Seitenfläche 45-I bzw. 45-II des Hohlprofils 41 greift in je eine der Nuten 33-I und 33-II ein.
Um das Dichtungselement in dem Bauteilspalt sicher zu fixieren und die Nutverbindung darüber hinaus abzudichten, sind die Seitenflächen 45-I und 45-II des Hohlprofils 41 in den Nuten geklemmt. (Die Klemmung ist in Figur 4 nicht wiedergegeben.) Zur Unterstützung der Klemmung sind die Seitenflächen 45-I und 45-II ziehharmonikaförmig ausgebildet und aus einem federnden Werkstoff hergestellt. Die so bei Klemmung der Seitenflächen hervorgerufenen Rückstellkräfte führen zu einer wirkungsvollen und betriebssicheren Fixierung und Abdichtung der Nutverbindung.

Das hier beschriebene Dichtungselement sowie die Anordnung des Dichtungselements in einer Strömungsmaschine stellen nur beispielhafte Ausführungsformen der Erfindung dar, die von einem Fachmann durchaus in vielfältiger Weise ergänzt und/oder modifiziert werden können, ohne den Erfindungsgedanken zu verlassen.
So ist beispielsweise in den Figuren 3 und 4 keine Kühlfluidzuführung dargestellt, die aber selbstverständlich vorhanden sein muss, um Kühlfluid in den Bauteilspalt zu befördern. Die Kühlfluidzuführung mündet hierbei in den durch das Dichtungselement abgedichteten Bereich des Bauteilspalts ein.
Auch kann die zweite Öffnung beispielsweise statt in die Hauptströmung in einen weiteren Kühlkanal einmünden und erst danach in die Hauptströmung abgegeben werden. Dies bietet sich insbesondere dann an, wenn die Kühlluft nach dem Durchströmen des Dichtungselements kühltechnisch noch nicht verbraucht ist.
Auch wurde die Anordnung eines Dichtungselements nur anhand eines beschaufelten Strömungskanals, d.h. für eine Turbine oder für einen Verdichter, erläutert. Das gleiche Prinzip kann aber beispielsweise auch in Brennkammern zur Anwendung kommen, wobei hier das Brennkammerdruckgefälle als axiales Druckgefälle entlang des Dichtungselements genutzt wird.
Auch ist die Anwendung des erfindungsgemäßen Dichtungselements nicht nur auf Hochtemperaturanwendungen beschränkt, sondern das erfindungsgemäße Dichtungselement kann auch bei niedrigeren Fluidtemperaturen zum Einsatz kommen.

### Bezugszeichenliste

- 1: Strömungsmaschine
- 2: Verdichter
- 3: Brennkammer
- 4: Turbine
- 5: Rotorwelle
- 6: Hauptströmung des Arbeitsfluids

- 10: Schaufel der Strömungsmaschine
- 11: Schaufelblatt
- 12: Deckbandelement

- 20: erfindungsgemäß ausgeführte Turbinenstufe
- 21: Rotorschaufel
- 22: Statorschaufel
- 23: Gehäuse / gehäuseseitige Begrenzung des Strömungskanals
- 24: Rotor / rotorseitige Begrenzung des Strömungskanals
- 25: Strömungskanal
- 26: Hauptströmung des Arbeitsfluids / Strömungsrichtung
- 27: Kühlluftreservoir
- 28-I, 28-II: Deckbandelemente

- 30-I: Kühlfluidströmung im Bereich der Einlassöffnung
- 30-II: Kühlfluidströmung innerhalb des Hohlprofils der Dichtung
- 30-III: Kühlfluidströmung im Bereich der Auslassöffnung
- 31: Bauteilspalt
- 32-I, 32-II: Seitenflächen des Bauteilspalts
- 33-I, 33-II: Nuten

- 40: erfindungsgemäß ausgeführtes Dichtungselement
- 41: Hohlprofil des Dichtungselements
- 42: Hohlraum des Hohlprofils
- 43: erste Seite des Hohlprofils
- 44: zweite Seite des Hohlprofils
- 45-I, 45-II: Seitenflächen des Hohlprofils
- 46-I, 46-II: Enden des Hohlprofils
- 47: erste Öffnung / Einlassöffnung

- 48: zweite Öffnung / Auslassöffnung

- A: Abstand zwischen erster Öffnung und zweiter Öffnung
- A-A: Schnittführung
- BR: Breitenrichtung
- LR: Längsrichtung
- Pkühlfluid: Druck des Kühlfluids
- Pheißgas 1: Druck des Arbeitsfluids auf Höhe der Einlassöffnung
- Pheißgas 2: Druck des Arbeitsfluids auf Höhe der Auslassöffnung

## Patentansprüche

1. Dichtungselement (40) zur Abdichtung eines Bauteilspalts (31) gegenüber einer in einem Strömungskanal geführten Strömung, insbesondere zur Verwendung in einer Strömungsmaschine,
wobei das Dichtungselement (40) ein Hohlprofil (41) mit einer Länge (L) und einer Breite (B) umfasst,
und das Hohlprofil (41) in Längsrichtung ein erstes Ende (46-I) und ein zweites Ende (46-II) sowie ferner eine erste Seite (43) und eine zweite Seite (44) aufweist und einen Hohlraum (42) umschließt,
**dadurch gekennzeichnet, dass**.
in dem Hohlprofil (41) eine erste Öffnung (47) und eine zweite Öffnung (48) angeordnet sind,
wobei die erste Öffnung (47) auf der zweiten Seite (44) des Hohlprofils angeordnet ist und als Einlassöffnung für ein Kühlfluid in den Hohlraum (42) des Hohlprofils ausgebildet ist,
und die zweite Öffnung (48) auf der ersten Seite (43) des Hohlprofils angeordnet ist und als Auslassöffnung für das Kühlfluid aus dem Hohlraum (42) des Hohlprofils ausgebildet ist,
und die erste Öffnung (47) und die zweite Öffnung (48) in Längsrichtung (LR) des Hohlprofils (41) unter einem Abstand (A) beabstandet sind.

2. Dichtungselement gemäss Anspruch 1, **dadurch gekennzeichnet, dass** der Abstand (A) zwischen der ersten Öffnung (47) und der zweiten Öffnung (48) so gewählt ist, dass bei Anordnung des Dichtungselements in der Strömungsmaschine ein im Betrieb der Strömungsmaschine auftretender statischer Druck der Strömung im Bereich der zweiten Öffnung im Mittel niedriger ist als ein Gesamtdruck des Kühlfluids am Eintritt in die erste Öffnung.

3. Dichtungselement gemäss Anspruch 2, **dadurch gekennzeichnet, dass** die erste Seite (43) bei Anordnung des Dichtungselements in der Strömungsmaschine der Strömung zugewandt ist und die zweite Seite (44) bei Anordnung des Dichtungselements in der Strömungsmaschine der Strömung abgewandt ist.

4. Dichtungselement gemäss einem der vorhergehenden Ansprüche, **dadurch gekennzeichnet, dass** das Hohlprofil (41) einen rechteckförmigen oder einen näherungsweise rechteckförmigen Querschnitt mit der ersten Seite (43) und der zweiten Seite (44) sowie mit zwei einander gegenüberliegenden Seitenflächen (45-I und 45-II) aufweist.

5. Dichtungselement gemäss einem der vorhergehenden Ansprüche, **dadurch gekennzeichnet, dass** die erste Öffnung (47) angrenzend an das erste Ende (46-I) des Hohlprofils und die zweite Öffnung (48) angrenzend an das zweite Ende (46-II) des Hohlprofils angeordnet ist.

6. Dichtungselement gemäss einem der vorhergehenden Ansprüche, **dadurch gekennzeichnet, dass** das Dichtungselement eine Hochtemperatur-Dichtung ist.

7. Dichtungselement gemäss Anspruch 6, **dadurch gekennzeichnet, dass** die erste Seite (43) des Hohlprofils des Dichtungselements aus einem hochtemperaturfesten Material hergestellt oder mit einem hochtemperaturfesten Material beschichtet ist.

8. Dichtungselement gemäss einem der vorhergehenden Ansprüche, **dadurch gekennzeichnet, dass** wenigstens eine Seitenfläche (46-I und/oder 46-II) des Hohlprofils aus einem federnden Material hergestellt ist.

9. Dichtungselement gemäss einem der vorhergehenden Ansprüche, **dadurch gekennzeichnet, dass** wenigstens eine Seitenfläche (46-I und/oder 46-II) des Hohlprofils mit einer federaktiven Kontur ausgeführt ist.

10. Dichtungselement gemäss Anspruch 9, **dadurch gekennzeichnet, dass** die federaktive Kontur der wenigstens einen Seitenfläche ziehharmonikaförmig ausgebildet ist.

11. Dichtungselement gemäss Anspruch 9, **dadurch gekennzeichnet, dass** die federaktive Kontur der wenigstens einen Seitenfläche halbrund oder halboval oder näherungsweise halbrund oder näherungsweise halboval ausgebildet ist.

12. Dichtungsanordnung zur Verwendung in einem Strömungskanal, der von einem Arbeitsfluid durchströmt wird und der wenigstens eine
Begrenzungswand umfasst,
wobei im Betrieb die Strömung des Arbeitsfluids in Strömungsrichtung einen Druckgradienten aufweist und die Begrenzungswand einen Bauteilspalt (31) mit wenigstens zwei Spaltseitenflächen (32-I, 32-II) umfasst,
**dadurch gekennzeichnet, dass**
zur Abdichtung des Bauteilspalts gegenüber dem Arbeitsfluid in dem Bauteilspalt oder im Bereich des Bauteilspalts ein Dichtungselement (40) gemäß einem der vorhergehenden Ansprüche angeordnet ist.

13. Strömungsmaschine, insbesondere Turbomaschine,
mit einem Strömungskanal, der im Betrieb der Strömungsmaschine von einem Arbeitsfluid durchströmt wird und der wenigstens eine Begrenzungswand umfasst,
wobei die Strömung des Arbeitsfluids in Strömungsrichtung einen Druckgradienten aufweist und die Begrenzungswand einen Bauteilspalt (31) mit wenigstens zwei Spaltseitenflächen (32-I, 32-II) umfasst,
**dadurch gekennzeichnet, dass**
zur Abdichtung des Bauteilspalts gegenüber dem Arbeitsfluid in dem Bauteilspalt ein Dichtungselement (40) gemäß einem der vorhergehenden Ansprüche angeordnet ist.

14. Strömungsmaschine gemäss Anspruch 13, **dadurch gekennzeichnet, dass** sich der Bauteilspalt im Wesentlichen in Strömungsrichtung des Arbeitsfluids erstreckt.

15. Strömungsmaschine gemäss einem der Ansprüche 13 oder 14, **dadurch gekennzeichnet, dass** zur Fixierung des Dichtungselements in dem Bauteilspalt in wenigstens einer Spaltseitenfläche (32-I, 32-II) eine Nut (33-I, 33-II) angeordnet ist, in die das Hohlprofil (41) längsseitig eingreift.

16. Strömungsmaschine gemäss einem der Ansprüche 13 bis 15, **dadurch gekennzeichnet, dass** die Strömung im Betrieb der Strömungsmaschine einen Druckgradienten über wenigstens einen Teil der Länge des Bauteilspalts ausbildet mit einem Bereich höheren Drucks und einem Bereich niedrigeren Drucks,
und die erste Öffnung (47) im Bereich des höheren Drucks der Strömung angeordnet ist und die zweite Öffnung (48) im Bereich des niedrigeren Drucks der Strömung angeordnet ist.

17. Strömungsmaschine gemäss einem der Ansprüche 13 bis 16, **dadurch gekennzeichnet, dass** der Bauteilspalt in einer Turbine der Strömungsmaschine angeordnet ist und der Bauteilspalt sich in Strömungsrichtung des Arbeitsfluids oder im Wesentlichen in Strömungsrichtung des Arbeitsfluids erstreckt und die zweite Öffnung (48) in Strömungsrichtung des Arbeitsfluids stromab der ersten Öffnung (47) angeordnet ist.

18. Strömungsmaschine gemäss einem der Ansprüche 13 bis 17, **dadurch gekennzeichnet, dass** die zweite Öffnung (48) in einen schaufelfreien Zwischenraum des Strömungskanals einmündet.

19. Strömungsmaschine gemäss einem der Ansprüche 13 bis 18, **dadurch gekennzeichnet, dass** die erste Öffnung und die zweite Öffnung um wenigstens eine Breite einer Schaufel zueinander beabstandet sind.

20. Strömungsmaschine gemäss einem der Ansprüche 13 bis 19, **dadurch gekennzeichnet, dass** die erste Öffnung und die zweite Öffnung um wenigstens eine Breite einer Stufe der Strömungsmaschine zueinander beabstandet sind.

21. Strömungsmaschine gemäss einem der Ansprüche 13 bis 20, **dadurch gekennzeichnet, dass** in den durch das Dichtungselement abgedichteten Bereich des Bauteilspalts eine Kühlfluidzuführung einmündet.

22. Strömungsmaschine gemäss einem der Ansprüche 13 bis 21, **dadurch gekennzeichnet, dass** die zweite Öffnung in einen weiteren Kühlkanal einmündet.

23. Strömungsmaschine gemäss einem der Ansprüche 13 bis 22, **dadurch gekennzeichnet, dass** der Bauteilspalt zwischen zwei strömungskanalbegrenzenden Deckbandelementen (28-I, 28-II) ausgebildet ist.

## Claims

1. A sealing element (40) for sealing a component gap (31) with respect to a flow carried in a flow channel, in particular for use in a fluid-flow machine,
the sealing element (40) comprising a hollow profile (41) with a length (L) and a width (B) and the hollow profile (41) having, in the longitudinal direction, a first end (46-I) and a second end (46-II) and also a first side (43) and a second side (44) and enclosing a cavity (42),
**characterized in that**
a first opening (47), and a second opening (48) are arranged in the hollow profile (41),
the first opening (47) being arranged on the second side (44) of the hollow profile and formed as an inlet opening for a cooling fluid into the cavity (42) of the hollow profile,
and the second opening (48) being arranged on the first side (43) of the hollow profile and formed as an outlet opening for the cooling fluid from the cavity (42) of the hollow profile,
and the first opening (47) and the second opening (48) being arranged spaced apart at a distance (A) in the longitudinal direction (LR) of the hollow profile (41).

2. The sealing element as claimed in claim 1, **characterized in that** the distance (A) between the first opening (47) and the second opening (48) is chosen such that, with the sealing element arranged in the fluid-flow machine, a static pressure of the flow in the region of the second opening occurring during the operation of the fluid-flow machine is lower on average than an overall pressure of the cooling fluid at the inlet into the first opening.

3. The sealing element as claimed in claim 2, **characterized in that**, with the sealing element arranged in the fluid-flow machine, the first side (43) faces toward the flow, and, with the sealing element arranged in the fluid-flow machine, the second side (44) faces away from the flow.

4. The sealing element as claimed in one of the preceding claims, **characterized in that** the hollow profile (41) has a rectangular cross section or an approximately rectangular cross section, with the first side (43) and the second side (44) and also with two side faces (45-1 and 45-II) lying opposite each other.

5. The sealing element as claimed in one of the preceding claims, **characterized in that** the first opening (47) is arranged adjacent the first end (46-I) of the hollow profile and the second opening (48) is arranged adjacent the second end (46-II) of the hollow profile.

6. The sealing element as claimed in one of the preceding claims, **characterized in that** the sealing element is a high-temperature seal.

7. The sealing element as claimed in claim 6, **characterized in that** the first side (43) of the hollow profile of the sealing element is produced from a high-temperature-resistant material or coated with a high-temperature-resistant material.

8. The sealing element as claimed in one of the preceding claims, **characterized in that** at least one side face (46-I and/or 46-II) of the hollow profile is produced from a resilient material.

9. The sealing element as claimed in one of the preceding claims, **characterized in that** at least one side face (46-I and/or 46-II) of the hollow profile is configured with an actively resilient contour.

10. The sealing element as claimed in claim 9, **characterized in that** the actively resilient contour of the at least one side face is formed in the manner of a concertina.

11. The sealing element as claimed in claim 9, **characterized in that** the actively resilient contour of the at least one side face is formed in a half-round and/or half-oval manner or approximately half-round and/or approximately half-oval manner.

12. A sealing element for use in a flow channel which is flowed through by a working fluid and which comprises at least one delimiting wall, during operation the flow of the working fluid flow having a pressure gradient in the direction of flow and the delimiting wall comprising a component gap (31) with at least two gap side faces (32-1, 32-II),
**characterized in that**,
to seal the component gap with respect to the working fluid, a sealing element (40) as claimed in one of the preceding claims is arranged in the component gap or in the region of the component gap.

13. A fluid-flow machine, in particular a turbomachine, with a flow channel which is flowed through by a working fluid during the operation of the fluid-flow machine and which comprises at least one delimiting wall,
the flow of the working fluid flow having a pressure gradient in the direction of flow and the delimiting wall comprising a component gap (31) with at least two gap side faces (32-1, 32-II),
**characterized in that**,
to seal the component gap with respect to the working fluid, a sealing element (40) as claimed in one of the preceding claims is arranged in the component gap.

14. The fluid-flow machine as claimed in claim 13, **characterized in that** the component gap extends substantially in the direction of flow of the working fluid.

15. The fluid-flow machine as claimed in either of claims 13 and 14, **characterized in that** a groove (33-1, 33-II) in which the hollow profile (41) engages on the longitudinal side is arranged in at least one gap side face (32-1, 32-II) to fix the sealing element in the component gap.

16. The fluid-flow machine as claimed in one of claims 13 to 15, **characterized in that** the flow during the operation of the fluid-flow machine forms a pressure gradient over at least part of the length of the component gap, with a region of higher pressure and a region of lower pressure, and the first opening (47) is arranged in the region of the higher pressure of the flow and the second opening (48) is arranged in the region of the lower pressure of the flow.

17. The fluid-flow machine as claimed in one of claims 13 to 16, **characterized in that** the component gap is arranged in a turbine of the fluid-flow machine and the component gap extends in the direction of flow of the working fluid or substantially in the direction of flow of the working fluid, and the second opening (48) is arranged downstream of the first opening (47) in the direction of flow of the working fluid.

18. The fluid-flow machine as claimed in one of claims 13 to 17, **characterized in that** the second opening (48) opens out into a blade-free intermediate space of the flow channel.

19. The fluid-flow machine as claimed in one of claims 13 to 18, **characterized in that** the first opening and the second opening are spaced apart from each other by at least a width of a blade.

20. The fluid-flow machine as claimed in one of claims 13 to 19, **characterized in that** the first opening and the second opening are spaced apart from each other by at least a width of a stage of the fluid-flow machine.

21. The fluid-flow machine as claimed in one of claims 13 to 20, **characterized in that** a cooling fluid supply opens out into the region of the component gap that is sealed by the sealing element.

22. The fluid-flow machine as claimed in one of claims 13 to 21, **characterized in that** the second opening opens out into a further cooling channel.

23. The fluid-flow machine as claimed in one of claims 13 to 22, **characterized in that** the component gap is formed between two flow-channel-delimiting shroud elements (28-1, 28-II).

## Revendications

1. Elément d'étanchéité (40) pour étancher une fente de composant (31) par rapport à un écoulement guidé dans un canal d'écoulement, en particulier pour l'utilisation dans une machine d'écoulement, l'élément d'étanchéité (40) comprenant un profilé creux (41) ayant une longueur (L) et une largeur (B),
et le profilé creux (41) présentant dans la direction longitudinale une première extrémité (46-I) et une deuxième extrémité (46-II) ainsi qu'un premier côté (43) et un deuxième côté (44) et entourant un espace creux (42),
**caractérisé en ce**
**qu'**une première ouverture (47) et une deuxième ouverture (48) sont prévues dans le profilé creux (41),
la première ouverture (47) étant disposée du deuxième côté (44) du profilé creux et étant réalisée en tant qu'ouverture d'entrée pour un réfrigérant dans l'espace creux (42) du profilé creux,
et la deuxième ouverture (48) étant disposée du premier côté (43) du profilé creux et étant réalisée en tant qu'ouverture de sortie pour le réfrigérant hors de l'espace creux (42) du profilé creux,
et la première ouverture (47) et la deuxième ouverture (48) étant espacées d'une distance (A) dans la direction longitudinale (LR) du profilé creux (41).

2. Elément d'étanchéité selon la revendication 1, **caractérisé en ce que** la distance (A) entre la première ouverture (47) et la deuxième ouverture (48) est choisie de telle sorte que lors de l'agencement de l'élément d'étanchéité dans la machine d'écoulement, une pression statique de l'écoulement, produite pendant le fonctionnement de la machine d'écoulement, dans la région de la deuxième ouverture, est en moyenne inférieure à une pression totale du réfrigérant à l'entrée dans la première ouverture.

3. Elément d'étanchéité selon la revendication 2, **caractérisé en ce que** le premier côté (43) lors de l'agencement de l'élément d'étanchéité dans la machine d'écoulement est tourné vers l'écoulement et le deuxième côté (44) lors de l'agencement de l'élément d'étanchéité dans la machine d'écoulement est tourné à l'opposé de l'écoulement.

4. Elément d'étanchéité selon l'une quelconque des revendications précédentes, **caractérisé en ce que** le profilé creux (41) présente une section transversale rectangulaire ou approximativement rectangulaire avec le premier côté (43) et le deuxième côté (44) ainsi qu'avec des surfaces latérales opposées l'une à l'autre (45-1 et 45-II).

5. Elément d'étanchéité selon l'une quelconque des revendications précédentes, **caractérisé en ce que** la première ouverture (47) est disposée à côté de la première extrémité (46-I) du profilé creux et la deuxième ouverture (48) est disposée à proximité de la deuxième extrémité (46-II) du profilé creux.

6. Elément d'étanchéité selon l'une quelconque des revendications précédentes, **caractérisé en ce que** l'élément d'étanchéité est un joint d'étanchéité haute température.

7. Elément d'étanchéité selon la revendication 6, **caractérisé en ce que** le premier côté (43) du profilé creux de l'élément d'étanchéité se compose d'un matériau résistant aux hautes températures, ou est revêtu d'un matériau résistant aux hautes températures.

8. Elément d'étanchéité selon l'une quelconque des revendications précédentes, **caractérisé en ce qu'**au moins une surface latérale (46-1 et/ou 46-II) du profilé creux est fabriquée à partir d'un matériau élastique.

9. Elément d'étanchéité selon l'une quelconque des revendications précédentes, **caractérisé en ce qu'**au moins une surface latérale (46-1 et/ou 46-II) du profilé creux est réalisée avec un contour à effet de ressort.

10. Elément d'étanchéité selon la revendication 9, **caractérisé en ce que** le contour à effet de ressort de l'au moins une surface latérale est réalisé en forme d'accordéon.

11. Elément d'étanchéité selon la revendication 9, **caractérisé en ce que** le contour à effet de ressort de l'au moins une surface latérale est réalisé sous forme semi-circulaire ou semi-ovale, ou approximativement semi-circulaire ou semi-ovale.

12. Agencement d'étanchéité pour l'utilisation dans un canal d'écoulement, qui est parcouru par un fluide de travail, et qui comprend au moins une paroi de limitation,
pendant l'opération l'écoulement du fluide de travail dans la direction de l'écoulement présentant, pendant le fonctionnement, un gradient de pression et la paroi de limitation comprenant une fente de composant (31) avec au moins deux surfaces latérales de fente (32-I, 32-II),
**caractérisé en ce que**
pour l'étanchéité de la fente de composant par rapport au fluide de travail, on dispose dans la fente de composant ou dans la région de la fente de composant un élément d'étanchéité (40) selon l'une quelconque des revendications précédentes.

13. Machine d'écoulement, en particulier turbomachine,
comprenant un canal d'écoulement, qui pendant le fonctionnement de la machine d'écoulement est parcouru par un fluide de travail et qui comprend au moins une paroi de limitation,
l'écoulement du fluide de travail dans la direction de l'écoulement présentant un gradient de pression et la paroi de limitation présentant une fente de composant (31) avec au moins deux surfaces latérales de fente (32-I, 32-II),
**caractérisée en ce que**
pour l'étanchéité de la fente de composant par rapport au fluide de travail, on dispose dans la fente de composant un élément d'étanchéité (40) selon l'une quelconque des revendications précédentes.

14. Machine d'écoulement selon la revendication 13, **caractérisée en ce que** la fente de composant s'étend essentiellement dans la direction d'écoulement du fluide de travail.

15. Machine d'écoulement selon l'une quelconque des revendications 13 ou 14, **caractérisée en ce que** pour la fixation de l'élément d'étanchéité dans la fente de composant, une rainure (33-I, 33-II) est disposée dans au moins une surface latérale de fente (32-I, 32-II), dans laquelle vient en prise du côté longitudinal le profilé creux (41).

16. Machine d'écoulement selon l'une quelconque des revendications 13 à 15, **caractérisée en ce que** l'écoulement pendant le fonctionnement de la machine d'écoulement génère un gradient de pression sur au moins une partie de la longueur de la fente de composant, avec une plage de pression supérieure et une plage de pression inférieure,
et la première ouverture (47) est disposée dans la région de la pression supérieure de l'écoulement et la deuxième ouverture (48) est disposée dans la région de la pression inférieure de l'écoulement.

17. Machine d'écoulement selon l'une quelconque des revendications 13 à 16, **caractérisée en ce que** la fente de composant est disposée dans une turbine de la machine d'écoulement et la fente de composant s'étend dans la direction de l'écoulement du fluide de travail ou essentiellement dans la direction de l'écoulement du fluide de travail, et la deuxième ouverture (48) est disposée dans la direction de l'écoulement du fluide de travail en aval de la première ouverture (47).

18. Machine d'écoulement selon l'une quelconque des revendications 13 à 17, **caractérisée en ce que** la deuxième ouverture (48) débouche dans un espace intermédiaire sans aube du canal d'écoulement.

19. Machine d'écoulement selon l'une quelconque des revendications 13 à 18, **caractérisée en ce que** la première ouverture et la deuxième ouverture sont espacées l'une de l'autre d'au moins une largeur d'aube.

20. Machine d'écoulement selon l'une quelconque des revendications 13 à 19, **caractérisée en ce que** la première ouverture et la deuxième ouverture sont espacées l'une de l'autre d'au moins une largeur d'étage de la machine d'écoulement.

21. Machine d'écoulement selon l'une quelconque des revendications 13 à 20, **caractérisée en ce que** dans la région de la fente de composant étanchéifiée par l'élément d'étanchéité, débouche une alimentation en réfrigérant.

22. Machine d'écoulement selon l'une quelconque des revendications 13 à 21, **caractérisée en ce que** la deuxième ouverture débouche dans un autre canal de refroidissement.

23. Machine d'écoulement selon l'une quelconque des revendications 13 à 22, **caractérisée en ce que** la fente de composant est réalisée entre deux éléments de bande de recouvrement (28-I, 28-II) limitant le canal d'écoulement.
